# EUROPÄISCHE PATENTANMELDUNG

(11) **EP 1 571 295 A1**
(43) Veröffentlichungstag der Anmeldung: **07.09.2005**
(21) Anmeldenummer: 04100817.8
(22) Anmeldetag: 01.03.2004
(51) Int. Cl.: F01D 5/18, F01D 9/04

(54) **Gekühlte Strömungsmaschinenschaufel und Verfahren zur Kühlung**

(71) Anmelder: Alstom Technology Ltd, 5400 Baden (CH)
(72) Erfinder: Fokine, Arkadi, 109444, Moskau (RU); Trifonov, Serguej, 109390, Moskau (RU); Trishkin, Alexandre, 140080, Lytkarino (RU); Vassiliev, Vladimir, 5300, Turgi (CH); Vinogradov, Dimitri, 1154047, Moskau (RU)

(57) **Zusammenfassung**

Es wird eine Strömungsmaschinenschaufel (110), insbesondere eine Turbinenschaufel einer Gasturbine vorgestellt, die einen Schaufelfuß (111) mit einer Kühlmittelzuführung (112) umfasst, einen Schaufelkopf (113), der mit einem Deckbandelement (114) ausgebildet ist, sowie ein Schaufelblatt (115). Innerhalb des Schaufelblatts (115) sind ein erster Durchströmkanal (119a) und ein zweiter Durchströmkanal (119b) angeordnet, die sich jeweils in Schaufellängsrichtung erstrecken. Längs eines Abschnitts des Deckbandelements (114) ist in dem Deckbandelement ein Deckbandkühlkanal (122) ausgebildet, der eine Einlassöffnung (123) und eine Auslassöffnung (124) umfasst, wobei die Einlassöffnung (123) des Deckbandkühlkanals in den ersten Durchströmkanal (119a) und die Auslassöffnung (124) des Deckbandkühlkanals in den zweiten Durchströmkanal (119b) mündet. Der zur Kühlung des Deckbandkühlkanals verwendete Kühlfluidmassenstrom wird somit über den zweiten Durchströmkanal (119b) abgeführt.

## Beschreibung

### Technisches Gebiet

Die Erfindung betrifft eine Strömungsmaschinenschaufel gemäß dem Oberbegriff des Anspruchs 1. Ferner betrifft die Erfindung ein Verfahren gemäß dem Oberbegriff des unabhängigen Verfahrensanspruchs.

### Stand der Technik

Aufgrund der in modernen Gasturbinen oder Gasturbogruppen heutzutage üblichen hohen Turbineneintrittstemperaturen muß oftmals wenigstens ein Teil der Turbinenschaufeln gekühlt werden.

Zur Kühlung der Schaufeln wird ein Kühlmittel, häufig Luft, die dem Verdichter entnommen wurde, durch Strömungskanäle innerhalb des Schaufelblattes geleitet. Die Kühlung erfolgt durch konvektiven Wärmeübergang von den Kanalwänden auf das Kühlfluid. Das erwärmte Kühlfluid wird dann oftmals über Bohrungen im Bereich der Hinterkante der Schaufel in die Schaufelumströmung abgegeben. Eine in dieser Weise fluidisch gekühlte Turbinenschaufel ist beispielsweise aus der US-Patentschrift US 4 820 123 oder auch aus der europäischen Patentanmeldeschrift EP 0 649 975 A1 bekannt.

Aufgrund der zunehmend steigenden Turbineneintrittstemperaturen heutiger Gasturbinen ist es oftmals auch erforderlich, alle dem Heißgasstrom ausgesetzten Bauteile zu kühlen. Somit ist nicht nur das Schaufelblatt, sondern auch der Schaufelfuß zu kühlen. Ferner sind insbesondere Schaufeln von Statoren häufig mit Deckbandelementen ausgestattet, die dann auch zu kühlen sind. Eine übliche Methode zur Kühlung von Deckbandelementen ist, ein Teil des Kühlfluids, das zur Kühlung des Schaufelblattes durch das Schaufelblatt strömt, durch eine in dem Deckbandelement angebrachte Kühlmittelbohrung zu führen und anschließend nach außen in die Umgebung der Schaufel abzugeben. Von hier gelangt das freigesetzte Kühlfluid über Bauteilspalte letztlich in die Hauptströmung der Turbine. Durch das Einströmen des Kühlfluids über Bauteilspalte werden jedoch einerseits Strömungsverluste der Hauptströmung verursacht. Ferner ist das abgegebene Kühlfluid oftmals für Kühlzwecke thermisch noch nicht verbraucht, so dass hierdurch auch ein thermodynamischer Verlust entsteht. Für eine geforderte Kühlleistung ist ein höherer Kühlfluidmassenstrom erforderlich. Beides führt zu einer Verschlechterung des Wirkungsgrades der Gasturbine oder Gasturbogruppe. Auch kann eine nicht angepasste Kühlung der Schaufeln zu einer verkürzten Lebenszeit der Schaufeln führen.

### Darstellung der Erfindung

Hier will die Erfindung Abhilfe schaffen. Der Erfindung liegt somit die Aufgabe zugrunde, eine Strömungsmaschinenschaufel und ein Verfahren der eingangs genannten Art anzugeben, mit welchen die Nachteile des Standes der Technik vermeiden werden.

Die Erfindung trägt dazu bei, eine mit einem Deckbandelement ausgeführte Strömungsmaschinenschaufel effektiver zu kühlen und die Kühleffektivität eines zur Kühlung verwendeten Kühlfluidmassenstroms zu steigern. Gemäß einem Aspekt werden die im Zusammenhang mit der Kühlung eines Deckbandelements einer Strömungsmaschinenschaufel entstehenden strömungsmechanischen und/oder thermodynamischen Verluste minimiert. Weiterhin trägt eine Ausführungsform die Erfindung dazu bei, die zu kühlenden Bereiche einer Strömungsmaschinenschaufel jeweils bedarfsangepasst zu kühlen.

Diese Aufgabe wird erfindungsgemäß durch die Strömungsmaschinenschaufel gemäss Anspruch 1 sowie durch das Verfahren gemäß dem unabhängigen Verfahrensanspruch gelöst. Weitere vorteilhafte Ausgestaltungen der Erfindung finden sich in den Unteransprüchen.

Die erfindungsgemäße Strömungsmaschinenschaufel umfasst einen Schaufelfuß mit einer Kühlmittelzuführung, einen Schaufelkopf, der mit einem Deckbandelement ausgebildet ist, sowie ein Schaufelblatt, welches sich zwischen dem Schaufelfuß und dem Schaufelkopf in einer Schaufellängsrichtung erstreckt und eine Schaufelblatt-Vorderkante sowie eine Schaufelblatt-Hinterkante aufweist. Innerhalb des Schaufelblattes sind ein erster Durchströmkanal und ein zweiter Durchströmkanal angeordnet, die sich jeweils in Schaufellängsrichtung erstrecken. Der erste Durchströmkanal mündet an seinem schaufelfußseitigen Ende in der Kühlmittelzuführung und steht an seinem schaufelkopfseitigen Ende mit dem schaufelkopfseitigen Ende des zweiten Durchströmkanals in Fluidverbindung. Der zweite Durchströmkanal ist an seinem schaufelfußseitigen Ende mit wenigstens einer Kühlmittelabführung in Fluidverbindung. Die Fluidverbindung ist dabei entweder direkt oder indirekt ausgeführt. Erfindungsgemäß ist wenigstens längs eines Abschnitts des Deckbandelements in dem Deckbandelement ein Deckbandkühlkanal ausgebildet, der wenigstens eine Einlassöffnung und wenigstens eine Auslassöffnung umfasst, wobei die wenigstens eine Einlassöffnung des Deckbandkühlkanals in den ersten Durchströmkanal und die wenigstens eine Auslassöffnung des Deckbandkühlkanals in den zweiten Durchströmkanal mündet.

Gemäss der Erfindung wird ein Kühlfluidmassenstrom über den ersten Durchströmkanal dem Deckbandkühlkanal zugeführt, durchströmt den Deckbandkühlkanal und wird gezielt über den zweiten Durchströmkanal wieder abgeführt. Der Kühlfluidmassenstrom dient somit nicht nur zur Kühlung des ersten Durchströmkanals sowie des Deckbandkühlkanals sondern auch zur Kühlung des zweiten Durchströmkanals. Dies führt zu einer Steigerung der Kühleffektivität des eingesetzten Kühlfluids. Somit kann bei gleicher erzielter Kühlleistung der Kühlfluidmassenstrom vermindert werden, wodurch letztendlich der Wirkungsgrad der Strömungsmaschine verbessert wird.

Um im Bereich des Schaufelblattes einen größeren Kühlfluidgesamtmassenstrom zum Einsatz bringen zu können, als dieser für die Kühlung des Deckbandkühlkanals erforderlich ist, ist der erste Durchströmkanal zusätzlich über eine weitere Verbindung direkt mit dem zweiten Durchströmkanal verbunden. Der über den ersten Durchströmkanal zugeführte Kühlfluidgesamtmassenstrom teilt sich somit auf in einerseits den Kühlfluidmassenstrom, der zur Kühlung des Deckbandelements durch den Deckbandkühlkanal geführt wird, und andererseits einen weiteren Kühlfluidmassenstrom, der über die weitere Verbindung in den zweiten Durchströmkanal gelangt.

Erfindungsgemäß wird das zur Kühlung des Deckbandelements genutzte Kühlfluid somit nicht im Bereich des Deckbandelements als Leckage an die Hauptströmung oder die Umgebung abgegeben. Es wurde erkannt, dass durch das Einbringen von Kühlfluid in die Hauptströmung im Bereich des Deckbandelements besonders hohe Mischungs- und Strömungsverluste in der Hauptströmung verursacht werden. Dies ist darin begründet, dass die wandnahe Hauptströmung im Bereich des Deckbandelements aufgrund der wandnahen Grenzschicht sowie der Ausbildung mehrerer Wirbelstrukturen, beispielsweise des Sekundärströmungswirbels, des Eckenwirbels und/oder des Hufeisenwirbels, energetisch defizitär ist. Weiterhin verursachen die hohen thermischen Unterschiede zwischen der Hauptströmung und dem noch nicht verbrauchten, zur Kühlung des Deckbandelements verwendeten Kühlfluid hohe thermisch bedingte Strömungsverluste.

Hier setzt die Erfindung dadurch an, dass das Kühlfluid nach dem Durchströmen des Deckbandkühlkanals nicht als Leckage in die Hauptströmung abgegeben wird, sondern dem zweiten Durchströmkanal zugeführt und von hier über die wenigstens eine Kühlmittelabführung gezielt abgeführt wird.

Gemäss einer bevorzugten Ausführungsform der Erfindung umfasst die Kühlmittelabführung wenigstens eine Ausströmöffnung, die im Bereich der Schaufelblatt-Hinterkante angeordnet ist. Es kann aber durchaus auch zweckmäßig sein, zur Kühlmittelabführung im Bereich der Schaufelblatt-Hinterkante eine Vielzahl von Ausströmöffnungen gleichmäßig verteilt über die Schaufelblattlänge anzuordnen. Das verbrauchte Kühlfluid strömt somit über die wenigstens eine Ausströmöffnung oder die Vielzahl der Ausströmöffnungen in die Hauptströmung ab. Durch eine dem Fachmann bekannte Ausgestaltung der Ausströmöffnungen erfolgt die Abströmung hierbei vorteilhaft so, dass das abströmende Kühlfluid über der Schaufelblatt-Hinterkante stromab der Ausströmöffnungen einen Kühlfilm ausbildet. Hierdurch wird einerseits die Schaufelblatt-Hinterkante besonders effektiv gekühlt. Andererseits werden die durch die Zumischung des Kühlfluids der Hauptströmung erzeugten Mischungsverluste hierdurch minimiert.

Vorzugsweise ist die erfindungsgemäße Strömungsmaschinenschaufel als Turbinenschaufel einer Gasturbine ausgebildet.

In einer zweckmäßigen Weiterbildung der Erfindung ist die Strömungsmaschinenschaufel als eine Schaufel eines Stators, insbesondere eines ersten oder zweiten, hinter einer Brennkammer angeordneten Stators, ausgeführt.

Die Erfindung kann in Kombination mit einem oder mehreren weiteren, in dem Deckbandelement angeordneten Austrittsöffnungen, durch die das in dem Deckbandkühlkanal geführte Kühlfluid im Bereich des Deckbandelements in die Umgebung der Strömungsmaschinenschaufel und/oder die Hauptströmung der Strömungsmaschine entströmt, ausgeführt sein. Ganz besonders zweckmäßig ist es jedoch, den gesamten Kühlfluidmassenstrom, der zur Kühlung des Deckbandelements dem Deckbandkühlkanal über die Einlassöffnung zugeführt wird, über die Auslassöffnung und den zweiten Durchströmkanal abzuführen. Der Deckbandkühlkanal ist hierfür gegenüber der Umgebung abgedichtet, d.h. in dem Deckbandelement sind keine weiteren Öffnung zur Verbindung des Deckbandkühlkanals mit der Außenseite der Strömungsmaschinenschaufel vorgesehen.

Gemäss einer vorteilhaften Ausgestaltung der Erfindung verläuft der Deckbandkühlkanal in dem Deckbandelement im wesentlichen parallel zu einer Innenfläche des Deckbandelements mit einer Erstreckung von etwa der Schaufelblatt-Vorderkante bis etwa der Schaufelblatt-Hinterkante. In einer Anordnung der Strömungsmaschinenschaufeln in einer Strömungsmaschine bilden die Innenflächen der am Umfang aneinandergereihten Deckbandelemente eine die Hauptströmung begrenzende Kanalwand, beispielsweise die gehäuseseitige oder die nabenseitige Kanalwand. Der Deckbandkühlkanal erstreckt sich somit zweckmäßig wenigstens über den sich durch lotrechte Projektion des Schaufelblattes auf das Deckbandelement ergebenden Bereich. In diesen Bereich wird durch das Schaufelblatt vermehrt Wärme in das Deckbandelement eingeleitet.

Der Deckbandkühlkanal ist zweckmäßig schlitzförmig ausgebildet. Ferner ist der Deckbandkühlkanal in dem Deckbandelement in einer Umfangsrichtung vorzugsweise beidseitig offen, wobei sich die Umfangsrichtung auf die Anordnung der Strömungsmaschinenschaufel in einer Strömungsmaschine bezieht. Durch Aneinanderreihung einer Vielzahl erfindungsgemäß ausgebildeter Strömungsmaschinenschaufeln am Umfang der Strömungsmaschine ergibt sich somit ein am Umfang durchgängiges Deckband mit einem am Umfang durchgängigen Deckbandkühlkanal. Dies ermöglicht eine am Umfang durchgängige und gleichmäßige Kühlung des gesamten Deckbands.

In einer weiteren zweckmäßigen Ausgestaltung der Erfindung ist der erste Durchströmkanal in dem Schaufelblatt angrenzend an die Schaufelblatt-Vorderkante angeordnet und der zweite Durchströmkanal in dem Schaufelblatt angrenzend an die Schaufelblatt-Hinterkante angeordnet. Das frische Kühlfluid strömt demzufolge zuerst entlang der thermisch hoch belasteten Schaufelblatt-Vorderkante, anschließend durch den Deckbandkühlkanal und abschließend entlang der thermisch geringer belasteten Schaufelblatt-Hinterkante. Dies führt zu einer angepassten Kühlung der Strömungsmaschinenschaufel sowie zu einer hohen Kühleffektivität des eingesetzten Kühlfluids. Durch angepasste und optimierte Kühlung wird des weiteren auch die Lebensdauer des Schaufel erhöht.

In einer weiteren zweckmäßigen Ausgestaltung der Erfindung sind zwischen dem ersten Durchströmkanal und dem zweiten Durchströmkanal in dem Schaufelblatt weiterhin wenigstens ein Paar weiterer Durchströmkanäle mit jeweils einer Erstreckung in Schaufellängsrichtung angeordnet. Die Durchströmkanäle sind so miteinander verbunden, dass sich insgesamt ein serpentinenartiger Kanalverlauf in dem Schaufelblatt ergibt.

In einer zweckmäßigen Ausgestaltung der Erfindung umfasst der Schaufelkopf eine erste Decklage, die das Schaufelblatt abdeckt. Wenigstens im Bereich der Schaufelblatt-Vorderkante sowie im Bereich der Schaufelblatt-Hinterkante ist jeweils ein Abschlusssteg angeordnet, der sich jeweils lotrecht oder näherungsweise lotrecht zur ersten Decklage von dieser aus erstreckt. Zwischen den Abschlussstegen ist in einem Abstand zu der ersten Decklage eine weitere Decklage so angeordnet, dass ein Zwischenraum zwischen der ersten Decklage und der weiteren Decklage den Deckbandkühlkanal ausbildet. Die Einlassöffnung und die Auslassöffnung sind in der ersten Decklage angeordnet. Schaufelfuß, Schaufelblatt, erste Decklage sowie die Abschlussstege können als einteiliges Gussstück hergestellt sein. Die weitere, zweite Decklage kann dann beispielsweise über eine Nut-Verbindung zwischen den Abschlussstegen fixiert werden.

Die erfindungsgemäß ausgeführte Strömungsmaschinenschaufel eignet sich insbesondere zur Verwendung in einem Turbinenstator, wobei hier in bekannter Weise eine Vielzahl von Strömungsmaschinenschaufeln am Umfang nebeneinander angeordnet sind. Besonders vorteilhaft sind alle Strömungsmaschinenschaufeln des Turbinenstators erfindungsgemäß ausgeführt.

Der Turbinenstator wiederum kann Teil einer Gasturbogruppe, beispielsweise einer Gasturbine, sein. Die erfindungsgemäß ausgeführte Strömungsmaschinenschaufel kann aber grundsätzlich auch in einem Rotor einer Gasturbogruppe Verwendung finden.

In einem weiteren Aspekt stellt die Erfindung ein Verfahren zur Kühlung eines Deckbandelements einer Strömungsmaschinenschaufel, insbesondere zur Kühlung eines Deckbandelements einer Turbinenschaufel einer Gasturbine, zur Verfügung. Das erfindungsgemäße Verfahren umfasst, einen Kühlmittelmassenstrom über das Schaufelblatt der Schaufel dem Deckbandelement zuzuführen, den Kühlmittelmassenstrom längs des zu kühlenden Deckbandelements zu führen und den Kühlmittelmassenstrom vollständig über das Schaufelblatt der Schaufel abzuführen.

In einer vorteilhaften Weiterbildung des erfindungsgemäßen Verfahrens wird der Strömungsmaschinenschaufel zur Kühlung dieser ein Kühlmittelgesamtmassenstrom zugeführt. Der Kühlmittelmassenstrom zur Kühlung des Deckbandelements wird dem Kühlmittelgesamtmassenstrom entnommen. Nach der Kühlung des Deckbandelements wird der entnommene Kühlmittelmassenstrom dem nach der Entnahme verbleibenden Teil des Kühlmittelgesamtmassenstroms wieder zugeführt.

In einer weiteren vorteilhaften Weiterbildung des erfindungsgemäßen Verfahrens wird der Kühlmittelgesamtmassenstrom angrenzend an die Schaufelblatt-Vorderkante zugeführt.

Des weiteren wird der Kühlmittelgesamtmassenstrom bevorzugt über eine über die Schaufelhöhe verteilte Abströmung an der Schaufelblatt-Hinterkante in eine Schaufelumströmung abgeführt.

In einer zweckmäßigen Ausgestaltung des erfindungsgemäßen Verfahrens wird der nach der Entnahme des Kühlmittelmassenstroms verbleibende Teil des Kühlmittelgesamtmassenstroms zur Kühlung der Strömungsmaschinenschaufel entlang eines serpentinenartigen Durchströmwegs durch das Schaufelblatt geleitet, bevor der entnommene Kühlmittelmassenstrom wieder zugeführt wird.

Das erfindungsgemäße Verfahren eignet sich insbesondere zur Kühlung einer Strömungsmaschinenschaufel, insbesondere einer Statorschaufel einer Gasturbogruppe.

### Kurze Beschreibung der Zeichnungen

Die Erfindung wird nachfolgend anhand eines in den Figuren illustrierten Ausführungsbeispiels näher erläutert. Es zeigen:
Figur 1 eine stark vereinfachte Darstellung einer Gasturbogruppe;
Figur 2 einen Längsschnitt durch eine erfindungsgemäß ausgeführte Strömungsmaschinenschaufel.

In den Figuren sind nur die für das Verständnis der Erfindung wesentlichen Elemente und Bauteile dargestellt.
Die dargestellten Ausführungsbeispiele sind rein instruktiv zu verstehen und sollen einem besseren Verständnis, aber nicht einer Einschränkung des Erfindungsgegenstandes dienen.

### Wege zur Ausführung der Erfindung

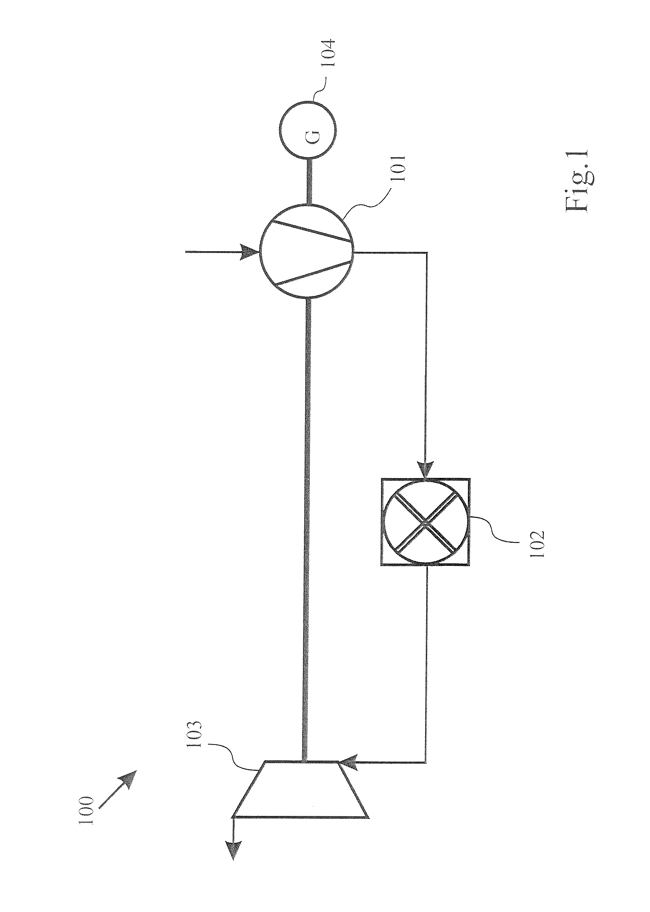

In Figur 1 ist in einer stark schematisierten Darstellung eine Gasturbogruppe 100 dargestellt, wie sie dem Fachmann geläufig ist und häufig beispielsweise zur Stromerzeugung oder für stationäre und mobile Antriebe, wie beispielsweise Flugzeugantriebe, Verwendung findet. Die beispielhaft dargestellte Gasturbogruppe umfasst als wesentliche Baugruppen einen Verdichter 101, eine Brennkammer 102 sowie eine Turbine 103. In dem Verdichter 102 wird eintretende Umgebungsluft verdichtet und der Brennkammer 102 zugeführt. In der Brennkammer 102 wird der verdichteten Luft Brennstoff beigemischt und das Gemisch verbrannt. In der Turbine 103 wird das in der Brennkammer 102 erzeugte Heissgas arbeitsleistend entspannt, wobei die Turbine 103 der hier dargestellten stationären Anlage neben dem Verdichter 101 einen Leistungsverbraucher 104, beispielsweise einen Generator zur Stromerzeugung, antreibt. Selbstverständlich ist es auch möglich, die Gasturbogruppe mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und stellen die Erfindung lediglich in einen anwendungsrelevanten Kontext, weshalb sie an dieser Stelle nicht weiter beschrieben werden.

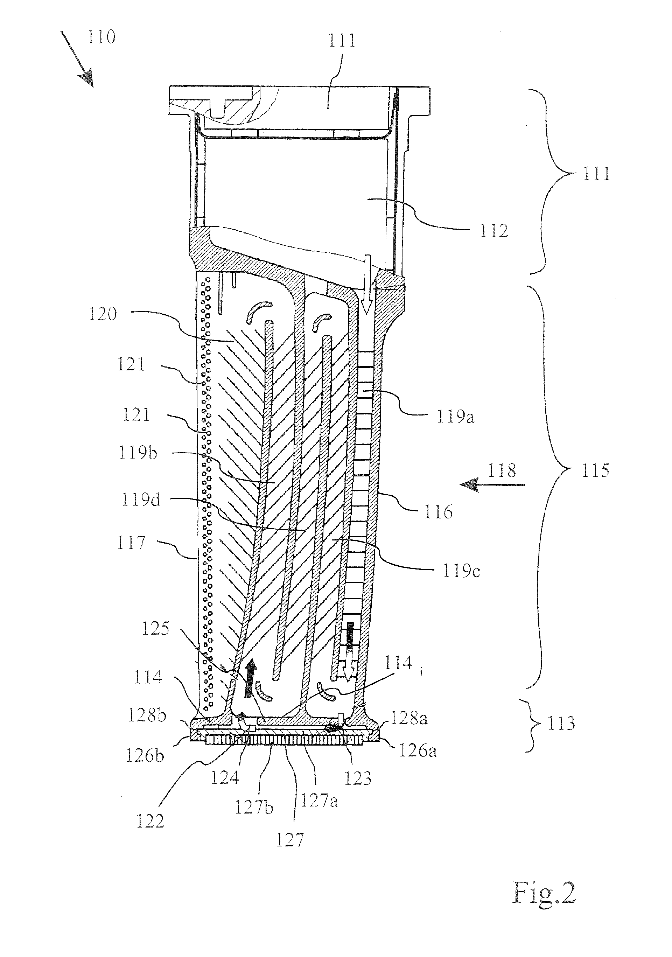

In Figur 2 ist ein Längsschnitt durch eine erfindungsgemäß ausgeführte, innengekühlte Strömungsmaschinenschaufel 110 (kurz: Schaufel) dargestellt, wie sie beispielsweise in der Turbine 103 der Gasturbogruppe 100 Verwendung findet. Die in Figur 2 dargestellte Strömungsmaschinenschaufel 110 ist eine Schaufel eines Stators einer Turbine, hier des zweiten Stators der Turbine 103. Gleichermaßen kann die Erfindung aber auch auf eine Rotorschaufel angewendet werden.

Die in Figur 2 dargestellte Strömungsmaschinenschaufel 110 umfasst einen Schaufelfuß 111 mit einer Kühlmittelzuführung 112, einen Schaufelkopf 113, der mit einem Deckbandelement 114 ausgebildet ist, sowie ein Schaufelblatt 115, welches sich zwischen dem Schaufelfuß 111 und dem Schaufelkopf 113 in einer Schaufellängsrichtung erstreckt und eine Schaufelblatt-Vorderkante 116 sowie eine Schaufelblatt-Hinterkante 117 aufweist.

Die Hauptströmung der Turbine durchströmt die Schaufel in Figur 2 gemäß dem Pfeil 118 von rechts nach links, wobei der Strömungskanal gehäuseseitig durch den Schaufelfuß 111 und nabenseitig durch das Deckbandelement 114 begrenzt wird.

Wie in dem Längsschnitt zu erkennen ist, sind innerhalb des Schaufelblattes insgesamt vier Durchströmkanäle 119a - 119d angeordnet, die sich jeweils in Schaufellängsrichtung erstrecken. Die Durchströmkanäle 119a - 119d sind so miteinander verbunden, daß sich insgesamt ein serpentinenartiger Kühlkanalverlauf in dem Schaufelblatt 115 ergibt.

Zum Zwecke einer in der Beschreibung konsistenten Nomenklatur wird der an die Schaufelblatt-Vorderkante 116 angrenzende Durchströmkanal als erster Durchströmkanal 119a und der an die Schaufelblatt-Hinterkante 117 angrenzende Durchströmkanal als zweiter Durchströmkanal 119b bezeichnet. Die zwischen dem ersten und zweiten Durchströmkanal angeordneten Durchströmkanäle werden in Strömungsrichtung der Hauptströmung als dritter Durchströmkanal 119c sowie als vierter Durchströmkanal 119d bezeichnet.

Der erste Durchströmkanal 119a ist an seinem schaufelfußseitigen Ende mit der Kühlmittelzuführung 112 und an seinem schaufelkopfseitigen Ende über den dritten und vierten Durchströmkanal 119c und 119d mit dem schaufelkopfseitigen Ende des zweiten Durchströmkanals verbunden. Der zweite Durchströmkanal wiederum ist schaufelfußseitig mit einem Kühlmittelabführkanal 120 verbunden, der sich längs der Schaufelblatt-Hinterkante 117 erstreckt. Weiterhin sind an der Schaufelblatt-Hinterkante 117 eine Vielzahl von Ausströmöffnungen 121 angeordnet, die jeweils mit dem Kühlmittelabführkanal 120 verbunden sind. Die Ausströmöffnungen 121 sind über die Schaufelblattlänge näherungsweise gleichmäßig verteilt angeordnet.

Kühlfluid, üblicherweise Luft, die im Verdichterbereich abgezweigt wurde, wird über die Kühlmittelzuführung 112 dem ersten Durchströmkanal 119a zugeführt und strömt von hier entlang dem serpentinenartigen Kühlkanalverlauf durch das Schaufelblatt 115. Durch die im Vergleich zur heißen Turbinenhauptströmung niedrige Temperatur des Kühlfluids kommt es längs der Kanalwände der Durchströmkanäle zu einem konvektiven Wärmeübergang und somit zu einer Kühlung des Schaufelblatts 115. Am Ende des zweiten Durchströmkanals 119b gelangt das bis dahin erwärmte und somit weitgehend verbrauchte Kühlfluid in den Kühlmittelabführkanal 120 und verteilt sich von hier etwa gleichmäßig auf die Ausströmöffnungen 121. Über die Ausströmöffnungen 121 gelangt das Kühlfluid letztendlich auf die Außenseite des Schaufelblatts und somit in die Turbinenhauptströmung. Beim Ausströmen aus den Ausströmöffnungen 121 bildet das Kühlfluid an der Schaufelblatt-Hinterkante zusätzlich einen Kühlfilm aus, der die dünne Hinterkante vor der heißen Hauptströmung schützt.

Um neben dem Schaufelblatt 115 auch das Deckbandelement 114 zu kühlen, ist erfindungsgemäß in einem Abschnitt des Deckbandelements 114 ein Deckbandkühlkanal 122 mit einer Einlassöffnung 123 und einer Auslassöffnung 124 ausgebildet. Die Einlassöffnung 123 des Deckbandkühlkanals 122 mündet in den ersten Durchströmkanal 119a und die Auslassöffnung 124 des Deckbandkühlkanals 122 in den zweiten Durchströmkanal 119b.

Der Deckbandkühlkanal 122 der in Figur 2 dargestellten Schaufel 110 ist gegenüber der Umgebung abgedichtet, d.h. der Deckbandkühlkanal 122 weist neben Öffnungen, die mit den Durchströmkanälen verbunden sind, wie beispielsweise der Einlassöffnung 123 und der Auslassöffnung 124 keine weiteren Öffnungen auf. Insbesondere sind in dem Deckbandelement keine Öffnungen vorhanden, durch die das in dem Deckbandkühlkanal geführte Kühlfluid in die Umgebung der Schaufel oder unmittelbar in die Hauptströmung entweichen kann.

Der Kühlfluidmassenstrom, der zur Kühlung des Deckbandelements 114 verwendet wird, wird dem Kühlfluidgesamtmassenstrom, der in dem ersten Durchströmkanal 119a geführt wird, entnommen, dem Deckbandkühlkanal 122 über die Einlassöffnung zugeführt 123 und nach dem Durchströmen des Deckbandkühlkanals 122 wieder vollständig über die Auslassöffnung 124 in den zweiten Durchströmkanal 119b abgeführt. Hier wird der zur Kühlung des Deckbandelements 114 verwendete Kühlfluidmassenstrom wieder mit dem Teil des Kühlfluidgesamtmassenstroms, der durch den dritten und vierten Durchströmkanal 119c und 199d geführt wurde, zusammengeführt und gelangt gemeinsam in den Kühlmittelabführkanal 120 und von hier über die Ausströmöffnungen 121 in die Turbinenhauptströmung.

Es hat sich gezeigt, dass durch die erfindungsgemäße Ausführung der Schaufel 110 einerseits die Strömungsverluste der Hauptströmung vermindert werden, als auch andererseits bei gleicher Kühlleistung insgesamt ein geringerer Kühlfluidgesamtmassenstrom erforderlich ist. Die Verminderung der Strömungsverluste ist darin begründet, dass bei der erfindungsgemäß ausgeführten Schaufel auch das zur Kühlung des Deckbandelements verwendete Kühlfluid in einem Abschnitt der Hauptströmung zugeführt und mit dieser vermischt wird, in dem die Hauptströmung sehr energiereich ist. Durch die Zumischung des Kühlfluids im Bereich des Schaufelblatts werden somit in der Hauptströmung keine oder nur geringe Strömungswirbel verursacht oder verstärkt. Die höhere Kühleffektivität ist darin begründet, dass das zur Kühlung des Deckbandelements verwendete Kühlfluid auch während der Durchströmung des zweiten Durchströmkanals und danach noch zur Kühlung der Schaufel 110 beiträgt.

Der in Figur 2 dargestellte Deckbandkühlkanal 122 ist in dem Deckbandelement 114 im wesentlichen parallel zu der Innenfläche 114ᵢ des Deckbandelements 114 mit einer Erstreckung von etwa der Schaufelblatt-Vorderkante 116 bis etwa der Schaufelblatt-Hinterkante 117 ausgebildet. Die Erstreckung von etwa der Schaufelblatt-Vorderkante 116 bis etwa der Schaufelblatt-Hinterkante 117 ist aus dem Grund vorteilhaft, weil in diesem Abschnitt vermehrt Wärme über das Schaufelblatt 115 in das Deckbandelement 114 eingeleitet wird.

Der in Figur 2 dargestellte, schlitzförmig ausgebildete Deckbandkühlkanal 122 ist des weiteren in lotrechter Richtung zur Zeichenebene der Figur 2 in dem Deckbandelement 114 beidseitig offen ausgeführt. Die lotrechte Richtung zur Zeichenebene der Figur 2 entspricht einer Umfangsrichtung der Anordnung der Schaufel in einer Strömungsmaschine. Durch Aneinanderreihung einer Vielzahl in dieser Weise erfindungsgemäß ausgebildeter Strömungsmaschinenschaufeln am Umfang der Strömungsmaschine ergibt sich ein am Umfang durchgängiges Deckband mit einem ebenso am Umfang durchgängigen Deckbandkühlkanal. Dies ermöglicht eine am Umfang durchgängige und gleichmäßige Kühlung des Deckbands.

Weiterhin ist Figur 2 ein geeignetes Herstellungsverfahren zur Herstellung des erfindungsgemäß ausgebildeten Deckbandkühlkanals 122 in dem Schaufelkopf 113 der Schaufel 110 zu entnehmen. Der in Figur 2 dargestellte Schaufelkopf 113 umfasst hierzu eine erste Decklage 125, die das Schaufelblatt 115 abdeckt. Ferner ist im Bereich der Schaufelblatt-Vorderkante 116 und im Bereich der Schaufelblatt-Hinterkante 117 jeweils ein Abschlusssteg 126a und 126b angeordnet, der sich jeweils lotrecht zur ersten Decklage 125 von dieser aus erstreckt.

Zwischen den Abschlussstegen 126a und 126b ist in einem Abstand zu der ersten Decklage 125 eine weitere Decklage 127 so angeordnet, dass der Zwischenraum zwischen der ersten Decklage 125 und der weiteren Decklage 127 den Deckbandkühlkanal 122 ausbildet. Die Einlassöffnung 123 und die Auslassöffnung 124 sind in der ersten Decklage 125 ausgebildet.

Während Schaufelfuß 111, Schaufelblatt 115, erste Decklage 125 sowie die Abschlussstege 126a und 126b als einteiliges Gussstück hergestellt sind, ist die weitere, zweite Decklage 127 erst nach Fertigstellung des Gussstücks zwischen den Abschlussstegen eingesetzt und über eine Nut-Verbindung 128a und 128b fixiert. Die weitere, zweite Decklage 127 umfasst hier zwei Schichten 127a und 127b.

Die in Figur 2 dargestellte Strömungsmaschinenschaufel 110 stellt nur eine beispielhafte Ausführungsform der Erfindung dar, die in vielfältiger Weise von einem Fachmann ohne Weiteres modifiziert werden kann. Beispielsweise können die Ausströmöffnungen an der Schaufel-Hinterkante entfallen und die Kühlmittelabführung über einen im Schaufelfuss angeordneten Kühlmittelabführkanal erfolgen.

### Bezugszeichenliste

- 100: Gasturbogruppe
- 101: Verdichter
- 102: Brennkammer
- 103: Turbine
- 104: Leistungsverbraucher
- 110: Strömungsmaschinenschaufel
- 111: Schaufelfuß
- 112: Kühlmittelzuführung
- 113: Schaufelkopf
- 114: Deckbandelement
- 114ᵢ: Innenfläche des Deckbandelements
- 115: Schaufelblatt
- 116: Schaufelblatt-Vorderkante
- 117: Schaufelblatt-Hinterkante
- 118: Richtung der Hauptströmung
- 119a: erster Durchströmkanal
- 119b: zweiter Durchströmkanal
- 119c: dritter Durchströmkanal
- 119d: vierter Durchströmkanal
- 120: Kühlmittelabführkanal
- 121: Ausströmöffnung
- 122: Deckbandkühlkanal
- 123: Einlassöffnung
- 124: Auslassöffnung
- 125: erste Decklage
- 126a, 126b: Abschlussstege
- 127: zweite Decklage
- 127a, 127b: Schichten
- 128a, 128b: Nutverbindung

## Patentansprüche

1. Strömungsmaschinenschaufel (110), insbesondere Turbinenschaufel einer Gasturbine oder Gasturbogruppe, umfassend einen Schaufelfuß (111) mit einer Kühlmittelzuführung (112), einen Schaufelkopf (113), der mit einem Deckbandelement (114) ausgebildet ist,
sowie ein Schaufelblatt (115), welches sich zwischen dem Schaufelfuß (111) und dem Schaufelkopf (113) in einer Schaufellängsrichtung erstreckt und eine Schaufelblatt-Vorderkante (116) und eine Schaufelblatt-Hinterkante (117) aufweist,
wobei innerhalb des Schaufelblatts (115) ein erster Durchströmkanal (119a) und ein zweiter Durchströmkanal (119b) angeordnet sind, die sich jeweils in Schaufellängsrichtung erstrecken, und der erste Durchströmkanal (119a) an dem schaufelfußseitigen Ende mit der Kühlmittelzuführung (112) und an dem schaufelkopfseitigen Ende mit dem schaufelkopfseitigen Ende des zweiten Durchströmkanals (119b) in Fluidverbindung steht, und der zweite Durchströmkanal (119b) an dem schaufelfußseitigen Ende mit einer Kühlmittelabführung (120, 121) in Fluidverbindung steht,
**dadurch gekennzeichnet, dass** wenigstens längs eines Abschnitts des Deckbandelements (114) in dem Deckbandelement (114) ein Deckbandkühlkanal (122) ausgebildet ist, der eine Einlassöffnung (123) und eine Auslassöffnung (124) umfasst,
wobei die Einlassöffnung (123) des Deckbandkühlkanals (122) in den ersten Durchströmkanal (119a) und die Auslassöffnung (124) des Deckbandkühlkanals (122) in den zweiten Durchströmkanal (119b) mündet.

2. Strömungsmaschinenschaufel gemäss Anspruch 1, **dadurch gekennzeichnet, dass** die Strömungsmaschinenschaufel (110) eine Schaufel eines Stators ist.

3. Strömungsmaschinenschaufel gemäss einem der vorhergehenden Ansprüche, **dadurch gekennzeichnet, dass** der Deckbandkühlkanal (122) gegenüber der Umgebung abgedichtet ist.

4. Strömungsmaschinenschaufel gemäss einem der vorhergehenden Ansprüche, **dadurch gekennzeichnet, dass** der Deckbandkühlkanal (122) in dem Deckbandelement (114) im wesentlichen parallel zu einer Innenfläche (114ₗ) des Deckbandelements (114) mit einer Erstreckung von etwa der Schaufelblatt-Vorderkante (116) bis etwa der Schaufelblatt-Hinterkante (117) ausgebildet ist.

5. Strömungsmaschinenschaufel gemäss einem der vorhergehenden Ansprüche, **dadurch gekennzeichnet, dass** der Deckbandkühlkanal (122) in dem Deckbandelement (114) in einer Umfangsrichtung der Anordnung der Strömungsmaschinenschaufel (110) in der Strömungsmaschine beidseitig offen ist.

6. Strömungsmaschinenschaufel gemäss einem der vorhergehenden Ansprüche, **dadurch gekennzeichnet, dass** der erste Durchströmkanal (119a) in dem Schaufelblatt (115) angrenzend an die Schaufelblatt-Vorderkante (116) angeordnet ist und der zweite Durchströmkanal (119b) in dem Schaufelblatt (115) angrenzend an die Schaufelblatt-Hinterkante (117) angeordnet ist.

7. Strömungsmaschinenschaufel gemäss einem der vorhergehenden Ansprüche, **dadurch gekennzeichnet, dass** zwischen dem ersten Durchströmkanal (119a) und dem zweiten Durchströmkanal (119b) in dem Schaufelblatt weiterhin wenigstens ein Paar weiterer Durchströmkanäle (119c, 119d) mit jeweils einer Erstreckung in Schaufellängsrichtung so angeordnet sind, dass die Durchströmkanäle (119a - 119d) einen serpentinenartigen Kanalverlauf in dem Schaufelblatt (115) ausbilden.

8. Strömungsmaschinenschaufel gemäss einem der vorhergehenden Ansprüche, **dadurch gekennzeichnet, dass** die Kühlmittelabführung wenigstens eine im Bereich der Schaufelblatt-Hinterkante angeordnete Ausströmöffnung (121) umfasst.

9. Strömungsmaschinenschaufel gemäss Anspruch 8, **dadurch gekennzeichnet, dass** die Kühlmittelabführung eine Vielzahl von Ausströmöffnungen (121) umfasst, die im Bereich der Schaufelblatt-Hinterkante gleichmäßig verteilt über die Schaufellänge angeordnet sind.

10. Strömungsmaschinenschaufel gemäss einem der vorhergehenden Ansprüche, **dadurch gekennzeichnet, dass** der Schaufelkopf (113) eine erste Decklage (125) umfasst, die das Schaufelblatt (115) abdeckt, und dass im Bereich der Schaufelblatt-Vorderkante (116) sowie im Bereich der Schaufelblatt-Hinterkante (117) jeweils ein Abschlusssteg (126a, 126b), die sich lotrecht zur ersten Decklage (125) von dieser aus erstrecken, angeordnet sind, und dass zwischen den Abschlussstegen (126a, 126b) in einem Abstand zu der ersten Decklage (125) eine weitere Decklage (127) so angeordnet ist, dass ein Zwischenraum zwischen der ersten Decklage (125) und der weiteren Decklage (127) den Deckbandkühlkanal (122) ausbildet, wobei die Einlassöffnung (123) und die Auslassöffnung (124) in der ersten Decklage (125) angeordnet sind.

11. Strömungsmaschinenschaufel gemäss einem der vorhergehenden Ansprüche, **dadurch gekennzeichnet, dass** der Schaufelfuß (111), das Schaufelblatt(115), die erste Decklage (125) des Schaufelkopfes und die Abschlussstege (126a, 126b) als einteiliges Gussstück hergestellt sind.

12. Turbinenstator mit einer Vielzahl von am Umfang nebeneinander angeordneten Strömungsmaschinenschaufeln, wobei wenigstens eine Strömungsmaschinenschaufel (110) gemäss einem der vorstehenden Ansprüche ausgeführt ist.

13. Gasturbogruppe mit wenigstens einer Strömungsmaschinenschaufel (110) gemäss einem der vorstehenden Ansprüche 1 bis 11.

14. Verfahren zur Kühlung eines Deckbandelements einer Strömungsmaschinenschaufel, insbesondere zur Kühlung eines Deckbandelements einer Turbinenschaufel einer Gasturbine oder Gasturbogruppe, umfassend, einen Kühlmittelmassenstrom über das Schaufelblatt der Strömungsmaschinenschaufel dem Deckbandelement zuzuführen, den Kühlmittelmassenstrom längs des zu kühlenden Deckbandelements zu führen und den Kühlmittelmassenstrom vollständig über das Schaufelblatt der Strömungsmaschinenschaufel abzuführen.

15. Verfahren nach Anspruch 14, umfassend, der Strömungsmaschinenschaufel zur Kühlung der Strömungsmaschinenschaufel einen Kühlmittelgesamtmassenstrom zuzuführen, den Kühlmittelmassenstrom zur Kühlung des Deckbandelements dem Kühlmittelgesamtmassenstrom zu entnehmen, und den entnommenen Kühlmittelmassenstrom nach der Kühlung des Deckbandelements dem nach der Entnahme verbleibenden Teil des Kühlmittelgesamtmassenstroms wieder zuzuführen.

16. Verfahren nach Anspruch 15, umfassend, den Kühlmittelgesamtmassenstrom angrenzend an eine Schaufelblatt-Vorderkante zuzuführen.

17. Verfahren nach einem der Ansprüche 15 oder 16, umfassend, den Kühlmittelgesamtmassenstrom über eine über die Schaufelhöhe verteilte Abströmung an einer Schaufelblatt-Hinterkante in eine Schaufelumströmung abzuführen.

18. Verfahren nach einem der Ansprüche 15 bis 17, umfassend, den nach der Entnahme des Kühlmittelmassenstroms verbleibenden Teil des Kühlmittelgesamtmassenstroms zur Kühlung der Strömungsmaschinenschaufel entlang eines serpentinenartigen Durchströmwegs durch das Schaufelblatt zu leiten, bevor der entnommene Kühlmittelmassenstrom wieder zugeführt wird.

19. Anwendung des Verfahrens gemäss einem der Ansprüche 14 bis 18 zur Kühlung einer Strömungsmaschinenschaufel, insbesondere einer Statorschaufel einer Gasturbogruppe.

20. Herstellungsverfahren zur Herstellung einer Strömungsmaschinenschaufel gemäss einem der Ansprüche 1 bis 11, umfassend, den Schaufelfuß, das innen hohl ausgeführte Schaufelblatt, die erste Decklage des Schaufelkopfes und die Abschlussstege als einteiliges Gussstück herzustellen, und die zweite Decklage zwischen den Abschlussstegen einzufügen.
